# EUROPÄISCHE PATENTSCHRIFT

(11) **EP 2 558 269 B1**
(45) Veröffentlichungstag und Bekanntmachung des Hinweises auf die Patenterteilung: **17.06.2020**
(21) Anmeldenummer: 11709011.8
(22) Anmeldetag: 08.03.2011
(51) Int. Cl.: B29C 45/14, B29D 29/00, B62D 29/00, B29L 31/30

(54) **KAROSSERIE FÜR EINEN PERSONENKRAFTWAGEN**
BODY FOR A PASSENGER CAR
CARROSSERIE POUR UN VÉHICULE DE TOURISME

(30) Priorität: 10.04.2010 DE 102010014504
(43) Veröffentlichungstag der Anmeldung: 20.02.2013
(73) Patentinhaber: Daimler AG, 70372 Stuttgart (DE)
(72) Erfinder: REESE, Eckhard, 21641 Apensen (DE)
(74) Vertreter: JENSEN & SON
(86) Internationale Anmeldenummer: PCT/EP2011/001142
(87) Internationale Veröffentlichungsnummer: WO 2011/124308

(56) Entgegenhaltungen:
- WO-A1-2004/091886
- WO-A1-2005/042182
- WO-A1-2007/038912
- DE-A1- 10 022 360
- US-A- 5 940 949

## Beschreibung

Die Erfindung betrifft ein Verfahren zum Herstellen einer Karosserie eines Personenkraftwagens. Des Weiteren betrifft die Erfindung eine solche Karosserie.

Im Serienfahrzeugbau von Personenkraftwagen werden üblicherweise eine Vielzahl von Karosseriebauteilen beispielsweise durch Schweiß- oder Klebverbindungen miteinander zur Herstellung der Fahrzeugstruktur verbunden. Dabei ist es des Weiteren bekannt, dass einzelne Karosseriebauteile der Karosserie mit einem Kunststoff versehen werden, um diese als Hybridbauteile zu gestalten. Derartige Hybridbauteile kommen beispielsweise bei Instrumententrägern, Türträgern oder anderen Trägerbauteilen zum Einsatz.

Vorhandene Personenkraftwagenkarosserien bestehen dabei üblicherweise aus einer Vielzahl von Einzelteilen, die durch aufwändige und teure Fügetechniken miteinander verbunden werden. Um dabei eine hinreichende Genauigkeit beim Zusammenfügen der einzelnen Karosseriebauteile zu erreichen, sind eine Vielzahl von Einzeloperationen auf sehr teuren Montagestraßen erforderlich. Die einzelnen Karosseriebauteile, welche üblicherweise vorzugsweise aus einer Stahl- oder Aluminiumlegierung bestehen, werden in Pressen beziehungsweise Rohbaustraßen in die gewünschte Geometrie umgeformt und in weiteren Arbeitsgängen durch Schweißroboter zur Karosserie zusammengefügt. Insbesondere bei Aluminium-Karosseriebauteilen kommen gegebenenfalls auch andere Fügetechniken wie Clinchkleben oder dergleichen zum Einsatz. Gegebenenfalls werden die Karosseriebauteile auch in Differentialbauweise - also mit unterschiedlichen Fügetechnologien - zusammengesetzt, beispielsweise wenn einzelne Karosserieteile aus einem Faserverbundkunststoff bestehen. Im Ergebnis jedenfalls führt dies zu vielen einzelnen und teuren Schritten bei hohen Kosten und Ungenauigkeiten. Ein weiteres Problem besteht darin, dass bisher Komponenten, Aggregate, Kabel oder dergleichen nur äußerst aufwändig an die Karosserie angebaut oder in diese integriert werden können.

Die PCT Anmeldung WO 2004/091886 A1 beschreibt ein Verfahren zur Herstellung eines Kunststoff-Metall-Verbundbauteils, bestehend aus einem oder mehreren Formteilen aus Metall oder Kunststoff, wobei die Formteile in einem Spritzgießwerkzeug gefügt und mittels thermoplastischem Kunststoff formschlüssig verbunden werden wobei das Fügen der Formteile beim Schließen des Spritzgießwerkzeugs erfolgt.

Bei der PCT Anmeldung WO 2005/042182 A1 wird ein stabiles Hybridbauteil mit einem ersten Blechteil, einem zweiten Blechteil und mindestens einem Kunststoffteil sowie ein rationelles Verfahren zur Herstellung eines solchen angegeben. Dabei werden die Blechteile zumindest im Bereich einer vorgesehenen Fügestelle flächig aneinander angelegt. Dabei wird das erste Blechteil an der vorgesehenen Fügestelle in Kontakt mit einer Kunststoffschmelze gebracht. Es wird das erste Blechteil durch Druckbelastung der Kunsstoffschmelze derart verformt, dass an der Fügestelle eine knopfartige Ausformung des ersten Blechteils gebildet wird, die das zweite Blechteil durchsetzt und zur Herstellung einer formschlüssigen Verbindung nach Art einer Hinterschneidung umgreift. Dabei wird die Kunststoffschmelze zumindest im Bereich der Ausformung zur Erstarrung gebracht

Das Patent US 5,940,949 A beschreibt ein Verfahren und eine Vorrichtung zur Herstellung von Kunststoff/Metallverbundkörpern durch eine Kombination von Metallfügetechnik und konventionellen Spritzgußverfahren in der Kavität eines modifizierten Spritzgußwerkzeuges.

Die PCT Anmeldung WO 2007/038912 A1 betrifft einen Trägerrahmen, insbesondere für Dachsysteme im Kraftfahrzeugbereich, mit zwei Längselementen und mit zwei Querelementen, wobei die Längs- und Querelemente in den ersten Abschnitten aus einem ersten Werkstoff mit einer hohen Festigkeit, in den zweiten Abschnitten aus einem zweiten Werkstoff mit einer niedrigeren Festigkeit und in dritten Abschnitten aus dem ersten und dem zweiten Werkstoff ausgebildet sind, und ein entsprechendes Herstellverfahren dazu.

Die Patentanmeldung DE 100 22 360 A1 beschreibt ein Verbundbauteil aus zwei Profilen und ein Verfahren zu seiner Herstellung, bei dem ein Profil mit einem freien Ende an das zweite Profil angrenzt oder in das zweite Profil eintaucht, wobei im Bereich der Anschlussstelle der Profile Verstärkungselemente angebracht sind, die einen Formschluss mit den Profilen bilden, und dass die Profile und durch im Bereich der Anschlussstelle angespritzten oder aufgeschrumpften thermoplastischen Kunststoffe miteinander verbunden sind.

Aufgabe der vorliegenden Erfindung ist es daher, ein Verfahren bereitzustellen, um eine verstärkbare Karosserie mit hoher Steifigkeit, Festigkeit und Strukturintegrität im Falle einer unfallbedingten Kraftbeaufschlagung der eingangs genannten Art zu schaffen, mittels welchen sich ein deutlich vereinfachter Herstellung- und Montageprozess der Karosserie realisieren lässt.

Die Aufgabe wird erfindungsgemäß durch ein Verfahren und eine Karosserie mit den Merkmalen der Patentansprüche 1 beziehungsweise 3 gelöst. Vorteilhafte Ausgestaltungen mit zweckmäßigen und nicht-trivialen Weiterbildungen der Erfindung sind im Patentanspruch 2 angegeben.

Um ein Verfahren bereitzustellen, mittels welchem die Karosserie des Personenkraftwagens in einem deutlich vereinfachten Herstellungs- und Montageverfahren geschaffen werden kann, ist es vorgesehen, dass die Karosserie in einem kombinierten Innenhochdruckumform- und Spritzgierverfahren hergestellt wird. Mit anderen Worten ist es vorgesehen, die gesamte oder zumindest einen großen Anteil der Fahrzeugkarosserie in einer entsprechend kombinierten Innenhochdruckumform- und Spritzgießanlage herzustellen. Dies erfolgt beispielsweise dadurch, dass entsprechende Karosseriebauteile durch Innenhochdruckumformen und/oder durch Spritzgießen von Kunststoff miteinander verbunden beziehungsweise ausgestattet werden. So ist es beispielsweise denkbar, einzelne Karosseriebauteile durch entsprechende Innenhochdruckumformverfahren wie Hydroclinchen oder Hydrostanznieten miteinander beispielsweise formschlüssig zu verbinden. Ebenso ist es denkbar, die Karosseriebauteile unter Vermittlung von Hybridverbindungsknoten durch Kunststoff miteinander zu verbinden. Darüber hinaus kann der Kunststoff auch dazu genutzt werden, um entsprechende Versteifungsstrukturen zumindest partiell an die jeweiligen Karosseriebauteile anzuspritzen. Hierdurch kann beispielsweise eine Gewichtsreduktion erfolgen, da die Wanddicken der Karosseriebauteile entsprechend reduziert werden können. Zudem können in dem Kunststoff Bauteil - und/oder Funktionsbereiche für Komponenten, Aggregate oder Bauteile integriert werden.

Im Ergebnis wird jedenfalls eine deutliche Vereinfachung des Prozessablaufes zum Herstellen der Personenkraftwagenkarosserie erreicht, da nicht nur die Karosseriebauteile in einem Schritt zusammengefügt werden können, sondern das darüber hinaus eine Vielzahl von bisher erforderlichen, separat an der Karosserie angeordneten Funktionsbereiche oder dergleichen nunmehr integraler Bestandteil der Karosserie sein können.

Ein weiterer Vorteil besteht in der drastischen Reduzierung der Anzahl der Einzelkomponenten, aus der die Fahrzeugkarosserie gefügt wird. Zudem ergibt sich eine Qualitätsverbesserung durch weniger Arbeitsschritte im Vergleich zu anderen Fügverbindungen, was sich insbesondere in geringeren Herstelltoleranzen und geringeren Widerholtoleranzen widerspiegelt. Ein weiterer Vorteil besteht darin, dass eine Karosserie mit hoher Steifigkeit, Festigkeit und Strukturintegrität beispielsweise im Falle einer unfallbedingten Kraftbeaufschlagung durch punktuelle Verstärkung der Strukturkomponenten mit dem Kunststoff realisieren lässt. Weitere Vorteile bestehen in einer hohen ökologischen Nachhaltigkeit dieses Konzeptes sowie einer Wirtschaftlichkeit auch mit kleinen Stückzahlen. Darüber hinaus sind neuartige, ausgefallene Designkonzepte durch das vorliegende Verfahren äußerst schnell und kostengünstig darstellbar. Die sehr hohe Funktionsintegration verringert dabei auch die nachfolgenden Herstellkosten und -zeiten. Darüber hinaus ergeben sich geringere Industrialisierungskosten für die Infrastruktur und Gebäude und geringerer Investitionskosten beispielsweise durch den Entfall der kathodischen Tauchlackierung und-beispielsweise Lackieranlagen.

Die vorstehend in dem Zusammenhang mit dem erfindungsgemäßen Verfahren beschriebenen Vorteile gelten in ebensolcher Weise für die Karosserie gemäß Anspruch 3.

Weitere Vorteile, Merkmale und Einzelheiten der Offenbarung ergeben sich aus der nachfolgenden Beschreibung bevorzugter Ausführungsbeispiele sowie anhand der Zeichnungen; diese zeigen in:
- Fig. 1: eine schematische Vorderansicht und eine schematische Seitenansicht auf eine Karosserie eines Personenkraftwagens in einer Mehrzahl von miteinander verbundenen Karosseriebauteilen, welche zumindest teilweise mit einem Kunststoff versehen sind, wobei die Karosserie in einem kombinierten Innenhochdruckumform- und Spritzgießverfahren hergestellt ist;
- Fig. 2: eine Perspektivansicht und eine perspektivische Schnittansicht auf zwei als Innenhochdruckumform-Rohrprofile ausgebildete Karosseriebauteile, welche über Kreuz angeordnet und über einen nicht erfindungsgemäßen Hybridverbindungsknoten miteinander verbunden sind;
- Fig. 3a, 3b: eine jeweilige Schnittansicht auf einen Doppelhybridverbindungsknoten zum Verbinden von zwei als Innenhochdruckumform-Rohrprofilen ausgebildeten Karosseriebauteilen mit einem Blech, wobei eine Kunststoffumspritzung vorgesehen ist, sowie auf einen nicht erfindungsgemäßen einzelnen Hybridverbindungsknoten zwischen einem Innenhochdruckumform-Rohrprofil mit einem Blech, welches ebenfalls mit einem Kunststoff umspritzt ist;
- Fig. 4: eine nicht erfindungsgemäße Verbindung von zwei als Blechen ausgebildeten Karosseriebauteilen, deren jeweilige Kragen miteinander eine Steckverbindung eingehen und durch eine Kunststoffumspritzung ummantelt sind;
- Fig. 5: jeweilige schematische Schnittansichten auf die Abfolge verschiedener Verfahrensschritte oben beim Hydroclinchen und unten beim Hydrostanznieten zum Fügen von verschiedenen Karosseriebauteilen;
- Fig. 6: eine schematische Draufsicht auf eine bekannte Anlage zum Herstellen der Karosserie des Personenkraftwagens in einer Innenhochdruckumform-Spritzgießmaschine;
- Fig. 7: eine perspektivische Explosionsdarstellung auf eine Karosserie eines Personenkraftwagens;
- Fig. 8: eine schematische Draufsicht auf die bekannte Anlage gemäß Fig. 6, wobei ein Bestückungskonzept der Innenhochdruckumform-Spritzgießmaschine erkennbar ist;

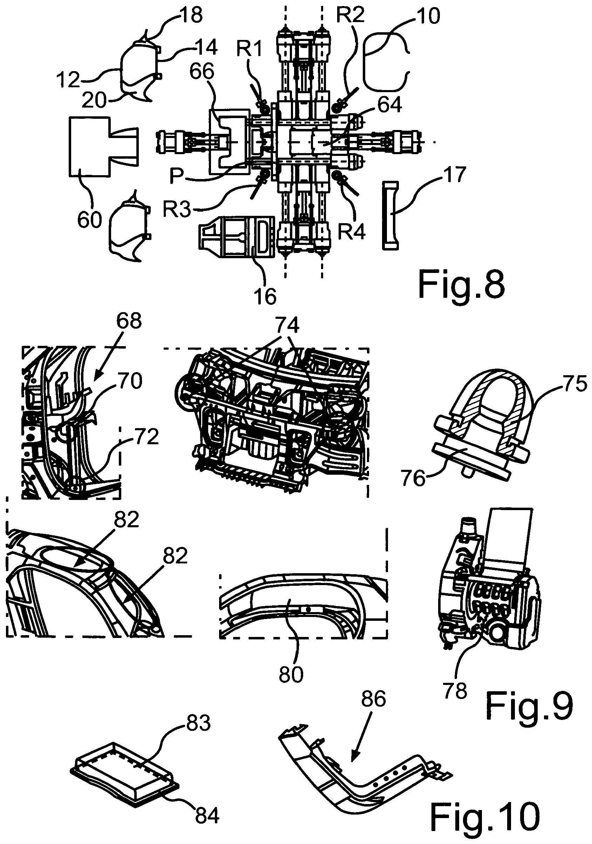

- Fig. 9: links oben eine ausschnittsweise Perspektivansicht auf die Karosserie des Personenkraftwagens im Bereich eines Instrumentenquerträgers, in der Mitte oben eine ausschnittsweise Perspektivansicht auf die Vorbaustruktur des Personenkraftwagens im Bereich von jeweiligen Aufnahmen für den Frontendträger, rechts oben eine perspektivische Schnittdarstellung einer Heckleuchtenschnappverbindung; rechts unten eine Perspektivansicht auf einen Gurtaufroller mit Gehäuse; in der Mitte unten eine ausschnittsweise Perspektivansicht auf eine Dachbeplankung der Kraftwagen-Karosserie, und links unten eine ausschnittsweise Perspektivansicht auf die Kraftwagen-Karosserie mit Aufnahmen der Interieur-Verkleidung über Schnappverbindungen; und in
- Fig. 10: eine Perspektivansicht auf ein Batterie-Flachzellengehäuse und eine Perspektivansicht auf ein Kunststoffstrukturteil mit Aufnahmen zur Kabelführung.

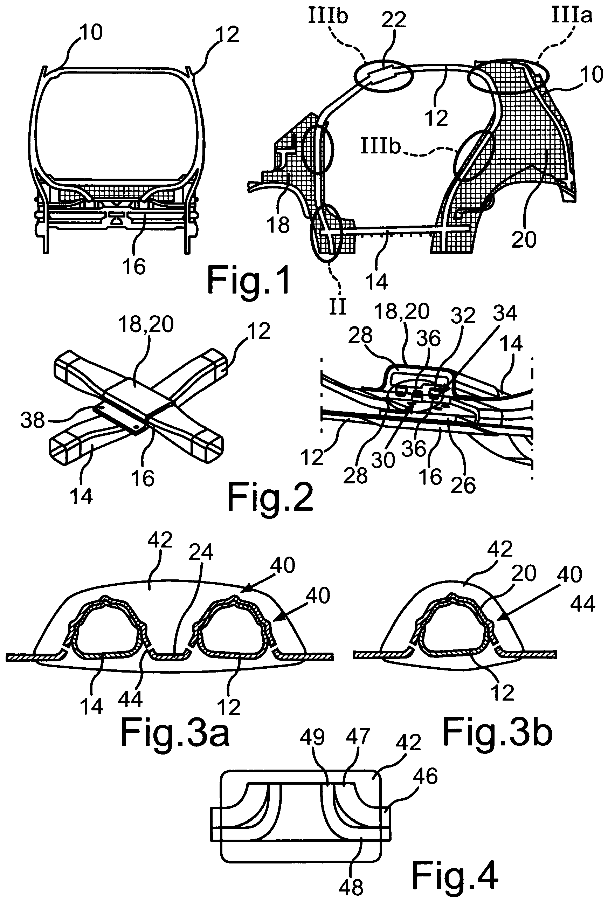

In Fig. 1 ist in einer schematischen Vorderansicht beziehungsweise Seitenansicht eine Karosserie für einen Personenkraftwagen dargestellt. Im vorliegenden Fall handelt es sich dabei um ein zweisitziges Fahrzeug in Einvolumenform, wobei die nachfolgend beschriebene Offenbarung auch bei anderen Bauarten von Kraftwagen-Karosserien zum Einsatz kommen kann. Folgende Karosseriebauteile sind dabei in Fig. 1 erkennbar: Ein Hinterrahmen-Profil 10, ein jeweiliges Seitenrahmen-Profil 12 und ein jeweiliges Seitenschweller-Profil 14. Diese Karosseriebauteile 10, 12, 14 sind jeweils als Innenhochdruckumform-Spritzgieß-Bauteile gestaltet. Des Weiteren erkennbar ist ein kunststoffumspritztes Bodenblech 16, ein kunststoffumspritztes vorderes Seitenstrukturblech 18, ein jeweiliges kunststoffumspritztes hinteres Seitenstrukturblech 20 sowie ein als Dachrahmenaufnahme ausgebildetes Knotenblech 22. Bei den Karosseriebauteilen 10 bis 22 kann es sich also im Wesentlichen um Rohr- beziehungsweise Hohlprofile oder aber um flächige Elemente wie Bleche handeln. Die Karosseriebauteile 10 bis 22 können aus metallischen Basisbauteilen bestehen, die mit Kunststoff, insbesondere faserverstärktem Kunststoff umspritzt sind. Anstelle der metallischen Ausbildung der Basisbauteile ist es denkbar, diese selbst aus einem vorzugsweise konsolidierten FVK-Werkstoff, insbesondere CFK-Werkstoff herzustellen. Bezüglich der Gesamtkarosserie sind auch Mischformen denkbar, das heißt, dass manche der Karosseriebauteile 10 bis 22 ein metallisches Basisbauteil und andere ein FVK-Basisbauteil beinhalten, je nach Bedarf und Anforderung, insbesondere an die mechanischen Eigenschaften wie Steifigkeit und Festigkeit.

Im Folgenden soll nun anhand der Fig. 2 bis 5 die verschiedenen, im Zusammenhang mit der vorliegenden Kraftwagen-Karosserie einsetzbaren Fügetechnologien erläutert werden:
Hierzu zeigt Fig. 2 in einer schematischen Perspektivansicht und einer perspektivischen Schnittansicht einen Hybridverbindungsknoten, mittels welchem beispielsweise gemäß dem Detail in Fig. 1 das Karosseriebauteil 12 in Form des Seitenrahmen-Profils mit dem Karosseriebauteil 14 in Form des Seitenschweller-Profils verbunden ist.

Insbesondere aus der Schnittansicht von Fig. 2 ist erkennbar, dass innerhalb des jeweiligen Hohlprofils der Karosseriebauteile 12 und 14 jeweils ein Einleger 26, 28 vorgesehen ist. Die Verbindung der beiden Karosseriebauteile 12, 14 erfolgt dabei durch eine Mehrzahl von formschlüssigen Hydroclinchverbindungen 30. Diese werden dadurch geschaffen, dass sowohl in den Einlegern 26, 28 entsprechende Durchgangsöffnungen 32 beziehungsweise Sacköffnungen 34 eingebracht werden, in welche die jeweils korrespondierenden Wandbereiche 36 des entsprechenden Karosseriebauteils 12, 14 durch Innenhochdruckumformbeaufschlagung hineingedrückt werden. Im Bereich des jeweiligen Wandbereichs 36 des entsprechenden Karosseriebauteils 12, 14 weist das jeweilig andere Karosseriebauteil 12, 14 ebenfalls eine Durchgangsöffnung auf. Im Ergebnis jedenfalls wird wenigstens eine formschlüssige Hydroclinchverbindung 30 im Bereich des Hybridverbindungsknotens geschaffen. In den beiden als Profilbauteilen ausgebildeten Karosseriebauteilen 12, 14 - dem Seitenrahmen-Profil und dem Seitenschweller-Profil - sind im vorliegenden Fall oberseitig beziehungsweise unterseitig jeweilige, im Querschnitt an die Karosseriebauteile 12, 14 angepasste Blechelemente vorgesehen. Im vorliegenden Fall handelt es sich hierbei um die beiden Seitenstrukturbleche 18 oder 20 bzw. um das Bodenblech 16. Diese sind ebenfalls über Hydroclinchverbindungen 38 miteinander verbunden. Nicht dargestellt sind im vorliegenden Fall Kunststoffverrippungen im Bereich des Hybridverbindungsknotens, welche zur Aussteifung und Funktionsintegration dienen können. An dieser Stelle sei angemerkt, dass ein derartiger Hybridverbindungsknoten gegebenenfalls auch ohne Einleger 26, 28 gestaltet sein kann. Es wird insbesondere eine Kunststoffkreuzverrippung verwendet, die um den Hybridverbindungsknoten gespritzt ist.

In den Fig. 3a und 3b sind weitere Hybridverbindungsknoten erkennbar, und zwar gemäß den jeweiligen Details IIIa beziehungsweise IIIb in der Seitenansicht von Fig. 1. So ist beispielsweise aus Fig. 3a in einer schematischen Schnittansicht erkennbar, dass die beiden Karosseriebauteile 10, 12, also das Hinterrahmen-Profil und das Seitenrahmen-Profil, über einen Doppelhybridverbindungsknoten miteinander gefügt sind. Dabei sind die beiden Karosseriebauteile 10, 12 über ein Tiefziehblech 24 miteinander verbunden. Das ebenfalls ein Karosseriebauteil darstellende Tiefziehblech 24 ist mit den Karosseriebauteilen 10, 12 über jeweilige Hydroclinchverbindungen 40 verbunden, welche auf bekannte Weise durch Innenhochdruckumformen erzeugt werden. Der gesamte Doppelverbindungsknoten ist mit Kunststoff 42 umspritzt, welcher vorliegend als Kunststoffumrippung ausgebildet ist. Innerhalb des Tiefziehblechs 24 ist eine Mehrzahl von Durchspritzpunkten 44 vorgesehen, durch welche sich ein Formschluss zwischen dem Kunststoff 42 und dem Tiefziehblech 24 beziehungsweise den Karosseriebauteilen 10 und 12 ergibt.

Fig. 3b zeigt in einer Schnittansicht der im Wesentlichen gleichen Gestaltung zwischen dem dortigen Tiefziehblech in Form des Seitenstrukturblechs 20 und dem korrespondierenden Karosseriebauteil 12, dem Seitenrahmen-Profil, welche über eine Mehrzahl von Hybridverbindungen 40 verbunden ist. Ebenfalls sind wiederum Durchspritzpunkte 42 vorgesehen. Aus Fig. 3b ist also ein Hybridverbindungsknoten erkennbar, bei welchem lediglich ein Rohr mit einem Blech gefügt und mit Kunststoff 42 umspritzt ist.

Wie aus Fig. 4 ersichtlich, kann das Fügen von zwei Karosseriebauteilen in Form von Blechen 46, 48 auch über eine Verbindung realisiert werden, bei welcher ein Kragen 47 des Blechs 46 mit einem Kragen 49 des Blechs 48 formschlüssig ineinander greifend verbunden wird. Bei dieser Verbindungsart werden in die beiden zu fügenden Bleche die Kragen 47 beziehungsweise 49 eingebracht, die in ihren Dimensionen aufeinander abgestimmt sind. Diese Kragen 47, 49 werden ineinander geschoben und mit Kunststoff 42 umspritzt.

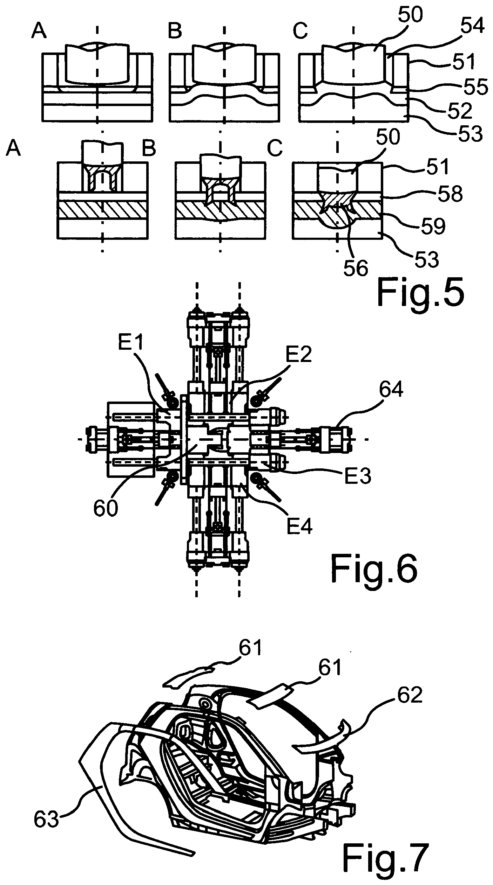

Fig. 5 zeigt in jeweiligen schematischen Schnittansichten zwei weitere formschlüssige Innenhochdruckumform-Fügeverfahren, die alternativ oder ergänzend zu den vorstehend genannten Verfahren beziehungsweise Verbindungen Anwendung finden können. Hierbei handelt es sich um das Hydroclinchen und das Hydrostanznieten. In den oberen drei Darstellungen von Fig. 5 ist dabei ein Stempel 50 und ein Niederhalter 51 erkennbar, welche vorliegend auf der druckabgewandten Seite eines als Fluidblech ausgestalteten Karosseriebauteils 52 angeordnet sind. Auf der Druckseite des Karosseriebauteils drückt dabei ein Hochdruckfluid 53, so dass ein Wandbereich des Karosseriebauteils 52 in die korrespondierende Öffnung des Niederhalters 51 und somit auch in eine korrespondierende Öffnung 54 eines mit dem Karosseriebauteil 52 zu verbindenden weiteren Karosseriebauteils 55 hineingedrückt wird, und zwar gegen die Kraft des Stempels 50. Durch das Hydroclinchen können somit Profile mit Profilen oder aber Profile mit Blechen beziehungsweise Bleche mit Blechen verbunden werden.

Analog hierzu zeigen die unteren Darstellungen von Fig. 5 das Hydrostanznieten, wobei ein Hydrostanzniet 56 mittels eines Stempels 50 in zwei zu verbindende Karosseriebauteile 58, 59 eingebracht wird, und zwar gegen den Druck des Hydrofluids 53, welcher auf der dem Hydrostanzniet 56 abgewandten Seite wirkt. Der Niederhalter 51 sorgt wiederum für eine sichere Auflage der beiden Karosseriebauteile 58, 59 aneinander. Auf diese Weise können durch Hydrostanznieten Profile mit Profilen, Profile mit Blechen oder Bleche mit Blechen verbunden werden.

Außerdem sind formschlüssige Fügetechniken möglich, die gegebenenfalls mit Umspritzungen aus Kunststoff verstärkt sind. Es können auch stoffschlüssige Fügetechniken zum Einsatz kommen. So kann bei der Verwendung eines Aluminium-Innenhochdruckumformrohrs und/oder -blechs und einer Umspritzung zum Beispiel aus Polyamid auf eine PA-basierende Primer-Beschichtung des Aluminium-Rohrs und/oder Blechs zurückgegriffen werden, die den Stoffschluss zwischen dem Aluminium-Rohr und den Umspritzungsverrippungen ermöglicht.

Fig. 6 zeigt in einer schematischen Draufsicht eine bekannte Anlage zum Herstellen einer solchen Karosserie eines Personenkraftwagens, welche auf im Weiteren noch näher beschriebenen Weise jeweilige Einrichtungen zum Innenhochdruckumformen und Spritzgießen umfasst, mittels welchen die Karosserie in einem kombinierten Innenhochdruckumform- und Spritzgießverfahren herstellbar ist. Die Karosserie soll dabei in einem so genannten "One-Shot-Verfahren" hergestellt werden. Im Wesentlichen umfasst die Anlage vier Einrichtungen beziehungsweise Einheiten E1, E2, E3 und E4, wobei die Einheiten E1, E2 und E4 vorliegend beweglich ausgeführt sind, während die Einheit E3 feststehend ist.

Die beweglich ausgeführte Einheit E1 dient dazu, einen Werkzeugkern 60 zu bestücken. Der Werkzeugkern 60 wird mit dieser Einheit E1 aus dem Inneren der Anlage beziehungsweise Maschine ausgefahren und kann außerhalb bestückt werden. Um beispielsweise die großflächigen Umspritzungen der Seitenwände und des Fahrzeugbodens auf einem horizontalen Maschinenkonzept realisieren zu können, wird die Karosserie um 90° um ihre Querachse gedreht. Damit die einzelnen Karosseriebauteile 10, 12, 14, 16, 18, 20 um den Werkzeugkern 60 angeordnet werden können und die zusammengefügte Karosserie noch entformbar bleibt, werden - wie in Fig. 7 veranschaulicht ist - Dachrahmen-Profile 61 und ein Querträger 62 in einem dem kombinierten Innenhochdruckumform- und Spritzgießverfahren nach geordneten Prozess mit der Karosserie verbunden. Beplankungselemente 63 werden ebenfalls - wie in Fig. 7 angedeutet ist - nachgelagert montiert.

Bei den Einheiten E2 und E4 handelt es sich jeweils um Zwei-Platten-Schließeinheiten mit integrierten Plastifiziereinheiten 64. Der Entfall der Zwei-Platten-Schließeinheiten ist gegebenenfalls durch die Integration in das Innenhochdruckumform-Spritzgieß-Werkzeug möglich. Die Einheiten E2 und E4 sind - wie eingangs erwähnt - beweglich ausgeführt, um die Endformbarkeit der Karosserie zu ermöglichen. Demgegenüber wird die Einheit E3 fest ausgeführt, um die Komplexität der Anlage beziehungsweise der Innenhochdruckumform-Spritzgießmaschine zu begrenzen. In Fig. 6 ist außerdem eine Transportablage 65 erkennbar, an welcher die Karosserie nach dem Endformen oberhalb der Anlage abgelegt werden kann. Dies kann mit einem Portalkran erfolgen.

In Fig. 8 ist in einer schematischen Draufsicht analog zu Fig. 6 die Anlage zum Herstellen der Karosserie gezeigt. Insbesondere erkennbar sind dabei vier Roboter R1 bis R4 sowie ein Portalkran P, mittels welchen die Bestückung des Werkzeugkerns 60 erfolgt.

Gemäß den in Fig. 8 gezeigten Bestückungskonzept der Anlage werden die beiden Strukturbleche 18, 20 sowie die beiden Dachrahmenbleche mit den vorgeformten Seitenrahmen-Profilen 12 zueinander positioniert - von beiden Seiten - an den Werkzeugkern 60 angelegt. Die Roboter R1 und R3 übernehmen diese Aufgabe. Der Roboter R2 bestückt die Bodenmatrize des Werkzeugs 60 mit dem vorgeformten Hinterrahmen-Rohr beziehungsweise Hinterrahmen-Profil 10. Der Roboter R4 bestückt die Matrize, die unbeweglich an der Einheit E3 angebunden ist, mit einem als Frontendblech ausgebildeten Karosseriebauteil 17. Der Portalkran P bestückt die Vorderseite des Werkzeugkerns 60 mit dem Bodenblech 16.

Der Portalkran P übernimmt neben der Funktion der Bestückung auch die Aufgabe, die fertig gefügte Innenhochdruckumform-Spritzgieß-Karosserie auf die sich oberhalb der Anlage beziehungsweise Maschine befindende Transportablage 66 zu befördern, von der aus die Karosserie dann zu den nachgelagerten Prozessen weiter transportiert wird.

Die vor und nach dem Innenhochdruckumform- und Spritzgießverfahren vorgesehenen Prozesse können örtlich neben der vorliegenden Anlage angeordnet sein. Zwischen den vor- und nachgelagerten Prozessen und der vorliegenden Anlage wird die Bereitstellung der Teile zur Aufnahme durch Roboter und durch den Portalkran P vorgenommen. Somit wird ein einfacher An- und Abtransport der Bauteile zur Anlage ermöglicht. In den vor- und nachgelagerten Prozessen ist im Bereich der Anlage auch ein spezieller Bereich für den Werkzeugwechsel reserviert. Dieser Werkzeugwechsel kann beispielsweise über den Portalkran P erfolgen.

Das Verfahren zum Herstellen der Karosserie des Personenkraftwagens geht nun folgendermaßen vonstatten:
Karosseriebauteile - beispielsweise die Bauteile 10 bis 20 -, die die Grundlage für die Karosseriestruktur bilden, werden als Halbzeuge vorgeformt in den Werkzeugkern 60 der Anlage eingelegt. Die endgültige Formgebung dieser Halbzeuge erfolgt durch das kombinierte Innenhochdruckumform- und Spritzgießverfahren im Werkzeug der Spritzgießmaschine. Bei diesem Verfahren handelt es sich um eine Innenhochdruckumformung, die mit einer beispielsweise simultanen Umspritzung der Karosserie mit dem Kunststoff 42 kombiniert ist. Insbesondere kommen dabei faserverstärkte Kunststoffe, insbesondere Thermoplaste, wie zum Beispiel PA oder PEEK oder aber Duroplaste zum Einsatz. Als Matrizenersatz kann - neben konventionellen Matrizen - dabei auch der außen am jeweiligen Rohrprofil des Karosseriebauteils 10 bis 20 anliegende Fluiddruck der Kunststoffschmelze fungieren. Mit anderen Worten kann die Kunststoffschmelze auch das Hochdruckfluid zum Umformen des jeweiligen Karosseriebauteils 10 bis 20 sein.

Die vorgeformten Halbzeuge der Karosseriebauteile 10 bis 20 kommen an beiden Karosserieseiten, im Bereich des Bodens und am Heck der Karosserie zum Einsatz. Diese werden dabei auf zuvor beschriebene Weise rund um den Werkzeugkern 60 angeordnet. An mechanisch hoch belasteten Stellen wie beispielsweise dem Scharnieranschluss der Türen und dem Anschlussbereich des Dachrahmenaufnahmeknotenblechs können die einzelnen Karosseriebauteile 10 bis 20, welche ein entsprechendes Hohlprofil aufweisen, beispielsweise mit einem entsprechenden Kunststoff lokal ausgeschäumt werden. Als solcher Kunststoff zum lokalen Ausfüllen des jeweiligen Hohlprofils des entsprechenden Karosseriebauteils 10 bis 20 kann beispielsweise PUR dienen. Diese Ausschäumung hat eine Steigerung der Steifigkeit und der Eigenschaften im Falle einer unfallbedingten Kraftbeaufschlagung zur Folge. Eine derartige lokale Ausschäumung ist beispielsweise im Bereich des Details IIIb in Fig. 1, also im Bereich des Dachrahmenaufnahmeknotenblechs, denkbar.

Die Strukturbleche - also beispielsweise das Seitenstrukturblech 18 und das Seitenstrukturblech 20 - werden vorliegend bereits in ihrer fast endgültigen Form in das Werkzeug eingelegt beziehungsweise im Werkzeugkern 60 angeordnet. Diese Strukturbleche 18 beziehungsweise 20 werden in der Innenhochdruckumform-Spritzgießmaschine mit faserverstärktem Kunststoff umspritzt. Durch diese Verstärkung lassen sich die Wandstärken der Strukturbleche 18, 20 reduzieren, wodurch weiteres Gewichteinsparungspotential ausgeschöpft wird. Derartige Strukturbleche 18, 20 finden zum Beispiel als Bodenstruktur, im Frontendbereich und an den seitlichen Strukturbereichen ihren Einsatz. Zur Erhaltung des Prinzips des Faradayschen Käfigs können zudem Metallstrukturen auch metallische Faserstrukturen und/oder leitfähige Fasern beispielsweise aus Carbon oder dergleichen in die Karosserie integriert beziehungsweise eingespritzt werden. Die Herstellung der Karosserie wird dabei im "One-Shot-Prinzip" realisiert. Das bedeutet, dass die gesamte oder ein großer Anteil der Karosserie in einem Werkzeug hergestellt wird. Zum Fügen der Karosserie werden die aus der Polymerhybridtechnik (In-Mold-Assembly-Verfahren) und Innenhochdruckumformung bekannten Verfahren eingesetzt.

Anhand der weiteren Fig. 9 und 10 sollen nun Möglichkeiten zur Funktionsintegration erläutert werden.

Dabei ist es zunächst denkbar, dass Bauteile, Leitungen oder dergleichen zumindest bereichsweise in dem Kunststoff 42 integriert werden. So ist es beispielsweise denkbar, in den als Strukturpolymerwerkstoff ausgebildeten Kunststoff 42 leitfähiges Material wie zum Beispiel Steuerleitungen und Energie führende Leitungen zu integrieren beziehungsweise direkt mit Kunststoff 42 zu umspritzen. Darüber hinaus können beispielsweise optische Fasern zur Beleuchtung dienen. Dabei ist sowohl eine indirekte wie auch eine direkte Leitungsführung möglich.

Eine alternative Funktionsintegration ist in Fig. 9 gezeigt. So zeigt die obere linke Darstellung ausschnittsweise die Karosserie im Bereich eines Instrumentenquerträgers 68 in einer perspektivischen Seitenansicht. Die Karosserie umfasst dabei mehrere Funktionsbereiche 70, 72 in Form von Anschlussflächen oder Positionierungsstellen oder dergleichen, über welche der Instrumentenquerträger 68 an der Karosserie fixiert beziehungsweise positioniert werden kann. Die Funktionsbereiche 70, 72 sind aus dem Kunststoff 42 geschaffen.

Die mittlere obere Darstellung in Fig. 9 zeigt die Karosserie im vorderen Bereich mit entsprechenden Funktionsbereichen 74, die als Anschlussflächen, Positionierungselemente oder dergleichen für den Frontendträger dienen. Diese Funktionsbereiche 74 sind ebenfalls in den Kunststoff 42 integriert.

Eine weitere derartige Funktionsintegration zeigt die rechte obere Darstellung von Fig. 9, bei welcher eine Schnappverbindung für eine Heckleuchte in einer teilweise geschnittenen Perspektivansicht gezeigt ist. Eine in der beiden Schnappverbindungsteile 75, 76 kann dabei auf Seiten der Karosserie als Funktionsbereich ausgebildet sein, welcher in den Kunststoff 42 integriert ist.

Gemäß der rechten unteren Darstellung von Fig. 9, welche einen Gurtaufroller mit Gehäuse zeigt, kann eine entsprechendes Gehäuseteil 78 ebenfalls aus Kunststoff 42 bestehen, welcher der Karosserie zugeordnet ist. Mit anderen Worten ist es somit auch denkbar, ein Gehäuseteil 78 einer solchen Komponente auf Seiten der mit Kunststoff 42 versehenden Karosserie vorzusehen.

Die mittlere untere Darstellung zeigt eine ausschnittsweise Perspektivansicht auf die Karosserie, wobei karosserieseitige Aufnahmen für einen Dachhimmel beziehungsweise eine Dachbeplankung 80 ebenfalls als Funktionsbereiche ausgebildet sein können. Diese Funktionsbereiche zur Befestigung der Dachbeplankung 80 können beispielsweise nach Art der Schnappverbindung gemäß der rechten oberen Darstellung ausgebildet sein, wobei wiederum das eine Schnappverbindungsteil 74 auf Seiten der Dachbeplankung 80 und das andere Schnappverbindungsteil 75 auf Seiten der Karosserie - durch deren Kunststoff 42 ausgebildet - vorgesehen ist.

Schließlich zeigt die linke untere Darstellung von Fig. 9 wiederum ausschnittsweise in Perspektivansicht die Karosserie, wobei Interieurverkleidungen 82 im Bereich der Türsäule beziehungsweise des Dachrahmens ebenfalls mit derartigen Schnappverbindungen befestigt sein können./

Durch die Gestaltungsmöglichkeiten, die durch die Herstellung der Karosserie im Innenhochdruckumform-Spritzgießverfahren entstehen, wird es möglich, energieeffiziente Antriebstechnologien zu integrieren, Funktionsbauteile von diesen einzusparen und die Funktion direkt in der Karosseriegeometrie zu berücksichtigen. So zeigt Fig. 10 rechts ein Batterie-Flachzellengehäuse mit zwei Gehäusehälften 83, 84 in einer Perspektivansicht, wobei beispielsweise die Funktion der einen Gehäusehälfte 84 direkt durch den Kunststoff 42 beziehungsweise die Karosseriegeometrie übernommen werden kann. Die restlichen Gehäusebauteile der Batterie können über ein Schnellspannsystem zum schnellen und automatischen Batteriewechsel an der Karosserie angeschlossen werden.

Schließlich zeigt die rechte Darstellung von Fig. 10 einen weiteren Einsatzbereich bei der Verwendung von Radnabenmotoren. So kann die Kabelführung direkt von der Karosserie aufgenommen werden. Ein Strukturbauteil beziehungsweise Karosseriebauteil 86, das durch Umspritzung die Kabelführung übernimmt, ist in Fig. 10 rechts dargestellt.

Als weitere Variante ist die Integration von Innenraumtemperier-Funktionen möglich. Es können flächenintegrierte Temperier-Strahlungssysteme in die Struktur beziehungsweise den Kunststoff 42 integriert werden. Diese Temperier-Strahlungssysteme (strom-/wärmeleitfähige umspritzte Strukturen) können verschiedene Anwendungen finden, beispielsweise als Bodenheizung, Stirnwandheizung, Rückwandheizung oder dergleichen.

Ebenfalls ist es denkbar, leitfähige Faserstrukturen und/oder Textilsensorsysteme in das Werkzeug einzulegen und mit dem Kunststoff 42 zu umspritzen. Sie führen bei Belastungen wie beispielsweise Bewegungen der Karosserie zur Veränderung des Leitungswiderstands beziehungsweise zu einer Kapazitätsänderung. Diese Änderung wird detektiert und erfasst. Hieraus können Erkenntnisse über die Betriebsfestigkeit oder im Hinblick auf eine Schadensbelastung gewonnen werden.

Insgesamt ist somit erkennbar, dass vorliegend ein Verfahren, eine Karosserie und eine Anlage geschaffen sind, mittels welchen eine Karosserie aus einer Mehrzahl von Karosseriebauteilen 10 bis 20 hergestellt werden kann, welche mit einem Kunststoff 42 in einem kombinierten Innenhochdruckumform- und Spritzgießverfahren versehen wird.

## Patentansprüche

1. Verfahren zum Herstellen einer Karosserie eines Personenkraftwagens, bei welchem eine Mehrzahl von Karosseriebauteilen (10 bis 20) als Doppelhybridverbindungsknoten miteinander verbunden werden, welche zumindest teilweise mit einem Kunststoff (42) versehen werden, und
die Karosserie in einem kombinierten Innenhochdruckumform- und Spritzgießverfahren hergestellt wird, wobei die beiden Karosseriebauteile (10, 12) über ein Tiefziehblech (24) miteinander als Doppelverbindungsknoten verbunden sind, während das ebenfalls ein Karosseriebauteil darstellende Tiefziehblech (24) mit den Karosseriebauteilen (10, 12) über jeweilige Hydroclinchverbindungen (40) verbunden ist, welche auf bekannte Weise durch Innenhochdruckumformen erzeugt werden, indem der gesamte Doppelverbindungsknoten mit Kunststoff (42) umspritzt ist,
welcher vorliegend als Kunststoffumrippung ausgebildet ist, wobei innerhalb des Tiefziehblechs (24) eine Mehrzahl von Durchspritzpunkten (44) vorgesehen ist, durch welche sich ein Formschluss zwischen dem Kunststoff (42) und dem Tiefziehblech (24) beziehungsweise den Karosseriebauteilen (10, 12) ergibt und wobei die Karosseriebauteile Rahmen-Profil sind.

2. Verfahren nach Anspruch 1,
wobei in den Kunststoff wenigstens ein Bauteil (75, 76; 78; 83) und/oder Funktionsbereich (70, 72, 74) für eine Komponente, ein Bauteil, ein Aggregat oder dgl. integriert wird.

3. Karosserie eines Personenkraftwagens,
wobei sie nach zumindest einem der Verfahren der vorhergehenden Ansprüche hergestellt wird.

## Claims

1. Method for producing a body of a passenger car, in which a plurality of body components (10 to 20) are joined to one another as double-hybrid connecting nodes which are at least partially provided with a plastic material (42), and in which the body is produced in a combined interior pressure shaping and injection moulding process, wherein the two body components (10, 12) are joined to each other as double connecting nodes via a deep-drawing steel (24) while the deep-drawing steel (24), which likewise represents a body component, is joined to the body components (10, 12) by way of respective hydro-clinch connections (40), which are produced in the known manner by interior pressure shaping, wherein the entire double connecting node is overmoulded with a plastic material (42) which is here designed as plastic ribbing, wherein within the deep-drawing steel (24) there is provided a plurality of through-injection points (44), through which a positive connection is obtained between the deep-drawing steel (24) and the body components (10, 12) respectively and wherein the body components are frame profiles.

2. Method according to claim 1, wherein at least one component (75, 76; 78; 83) and/or functional region (70, 72, 74) for a component, assembly or the like is/are integrated into the plastic material.

3. Body of a passenger car, wherein it is produced in accordance with at least one of the methods of the preceding claims.

## Revendications

1. Procédé de fabrication d'une carrosserie d'un véhicule particulier dont une pluralité d'éléments structuraux de carrosserie (10 à 20) sont reliées entre eux sous la forme de nœuds de liaison hybride double, qui sont au moins à certains endroits pourvus d'une matière plastique (42), et la carrosserie étant fabriquée selon un procédé qui combine le moulage par injection et la déformation plastique sous haute pression interne, les deux éléments structuraux de carrosserie (10, 12) étant reliées entre eux sous la forme de nœuds de liaison hybride double au moyen d'une tôle d'emboutissage (24) tandis que la tôle d'emboutissage (24) comportant, elle aussi, un élément structural de carrosserie, est reliée aux éléments structuraux de carrosserie (10, 12) au moyen des liaisons correspondantes par hydro-rivetage (40) que l'on obtient de manière connu par déformation plastique sous haute pression interne en surmoulant l'ensemble des nœuds de liaisons double dans le plastique (42), ledit plastique se présentant ici sous la forme de nervures circonférentielles, à l'intérieur de la tôle d'emboutissage (24) étant disposée une pluralité de points d'injection intégrale (44) qui permet d'obtenir une liaison mécanique entre le plastique (42) et la tôle d'emboutissage (24) ou bien les éléments structuraux de carrosserie (1à, 12) et les éléments structuraux de carrosserie étant des profilés de cadre.

2. Procédé selon la revendication 1, dans le plastique étant intégrés au moins un élément structural (75, 76, 78, 83) et/ou une zone fonctionnelle (70, 72, 74) pour un composant, un élément structural, un groupe ou similaire.

3. Carrosserie d'un véhicule particulier, ladite carrosserie étant fabriquée selon au moins l'un des procédés mentionnés dans les revendications précédentes.
